# EUROPEAN PATENT APPLICATION

(11) **EP 4 768 330 A1**
(43) Date of publication of application: **01.07.2026**
(21) Application number: 25223788.8
(22) Date of filing: 16.12.2025
(51) Int. Cl.: B60N 2/28

(54) **MULTI-MODE SEAT BELT SELECTION CONTROL MECHANISM AND MULTI-MODE SEAT BELT-EQUIPPED CHILD SEAT**

(30) Priority: 24.12.2024 CN 202411916343
(71) Applicant: Maxi Miliaan B.V., 5704 RD Helmond (NL)
(72) Inventor: Li, Xu, Henglan, Zhongshan, Guandong (CN); Lu, Dequan, Henglan, Zhongshan, Guandong (CN)
(74) Representative: Veldman-Dijkers, Cornelia G. C.

(57) **Abstract**

The present invention discloses a multi-mode seat belt selection control mechanism and a multi-mode seat belt-equipped child seat, where the selection control mechanism includes a support mechanism for supporting a child seat belt when deployed and capable of being folded; one side of the support mechanism is provided with a limiting mechanism for limiting a headrest height and a control mechanism for controlling deployed and folded states of the support mechanism while causing the limiting mechanism to synchronously adjust the headrest height, enabling the support mechanism to correspond to a low headrest height when deployed and to a high headrest height when folded; and the selection control mechanism is capable of limiting a headrest adjustment height and linking a headrest height limit with the deployed and folded states of the support mechanism, thereby ensuring appropriate use of the child seat belt and preventing safety risks to children due to misuse of the child seat belt by a user.

## Description

### TECHNICAL FIELD

The present invention relates to the technical field of safety seats, and in particular, to a multi-mode seat belt selection control mechanism and a multi-mode seat belt-equipped child seat.

### BACKGROUND

With the increasing popularity of automobiles and the growing public awareness of child passenger safety, the use of child car seats has become more widespread. In the event of a car collision, child car seats play a crucial protective role in reducing the risk of injury or death for child passengers. For existing child car seats, a child seat's built-in belt is used for a younger child, while an older child faces ambiguity regarding whether to use a child seat's built-in belt or a car's built-in seat belt. A child seat's built-in belt is also often called a child seat's harness system. A car's built-in seat belt is also often called a vehicle belt. When a car is hit, an older child passenger therein may detach together with the belt from the car seat due to heavy weight, posing a safety risk during the use of a child car seat.

### SUMMARY

In order to solve the problem that an older child faces ambiguity regarding whether to use a child seat's built-in belt or a car's built-in seat belt, posing a safety risk during the use of a child seat, the present invention provides a multi-mode seat belt selection control mechanism and a multi-mode seat belt-equipped child seat, and the present invention is achieved by the following technical solutions:
a multi-mode seat belt selection control mechanism, where the selection control mechanism includes a support mechanism for supporting a child seat belt when deployed and capable of being folded; and one side of the support mechanism is provided with a limiting mechanism for limiting a headrest height and a control mechanism for controlling deployed and folded states of the support mechanism while causing the limiting mechanism to synchronously adjust the headrest height, enabling the support mechanism to correspond to a low headrest height when deployed and to a high headrest height when folded.

For the multi-mode seat belt selection control mechanism described above, the control mechanism includes a locking switch for releasing the support mechanism from the deployed and folded states and for releasing the limiting mechanism from a headrest adjustment height limit, and a locking mechanism for locking the support mechanism in the deployed and folded states and for restricting the limiting mechanism from adjusting the headrest height.

For the multi-mode seat belt selection control mechanism described above, the locking mechanism includes a first locking portion for matching and connecting with the locking switch to enable the locking switch to unlock a connection between the support mechanism and the locking mechanism; the first locking portion is connected to a second locking portion for locking the support mechanism in the deployed and folded states; and the second locking portion is connected to a third locking portion for matching and connecting with the limiting mechanism.

For the multi-mode seat belt selection control mechanism described above, the first locking portion includes a first inclined surface for abutting against the locking switch and a first mounting hole for enabling the locking mechanism to be reset; and the first mounting hole can be provided with a spring for enabling the locking mechanism to be reset.

For the multi-mode seat belt selection control mechanism described above, the second locking portion includes a first protruding member capable of being engaged with the support mechanism; and the first protruding member is provided with a first engaging surface engaged with the support mechanism at the low headrest height, a second engaging surface engaged with the support mechanism at the high headrest height, and a pushing surface for enabling a user to push the locking mechanism.

For the multi-mode seat belt selection control mechanism described above, the third locking portion includes a first connecting rod for connecting with the second locking portion and a third engaging member for engaging in the limiting mechanism; the first connecting rod is provided with a first buckle for connecting with the third engaging member; the third engaging member is provided with a buckle hole for accommodating the first buckle and a third engaging protrusion for engaging in the limiting mechanism; and the first connecting rod and the third engaging member are provided with a spring enabling the third engaging member to extend/retract toward the first connecting rod.

For the multi-mode seat belt selection control mechanism described above, the support mechanism includes a first support member for connecting and supporting a shoulder strap of the seat belt; the first support member is provided with a rotating cylinder and capable of rotating about an axis of the rotating cylinder, and the first support member is connected to a limiting block for limiting rotation of the first support member; and the limiting block is provided with a cylindrical slot for accommodating the rotating cylinder and a first limiting hole for limiting a movement of the first protruding member.

For the multi-mode seat belt selection control mechanism described above, the locking switch includes a pressing portion for a user to press and an abutting portion for abutting against the locking mechanism to move the locking mechanism after the user presses the pressing portion; the pressing portion is provided with a pressing surface for the user to press; and the abutting portion is provided with a second inclined surface for matching and connecting with the first inclined surface.

For the multi-mode seat belt selection control mechanism described above, the limiting mechanism includes a first sliding groove for the third engaging protrusion to slide at the low headrest height and a second sliding groove for the third engaging protrusion to slide at the high headrest height; a switching portion is provided between the first sliding groove and the second sliding groove for enabling the headrest height to be switched between the low headrest height and the high headrest height; the switching portion includes a first switching member and a second switching member, with the first switching member being a first triangular protrusion and the second switching member being a second triangular protrusion; and the first triangular protrusion and the second triangular protrusion are arranged in an inverted manner, and a third sliding groove is provided between bevel edges of the first triangular protrusion and the second triangular protrusion for the first sliding groove and the second sliding groove to communicate with each other.

A multi-mode seat belt-equipped child seat is further provided, including a seat back provided with a height-adjustable headrest, where one side of the headrest is provided with a seat belt for protecting a child; the seat back is provided with the selection control mechanism described above; and the selection control mechanism allows a user to adjust a height of the headrest based on the child's posture and select a usage mode of the seat belt.

Compared with the prior art, the present invention has the following advantages:
1. by using the selection control mechanism to control the deployed and folded states of the support mechanism and cause the limiting mechanism to synchronously adjust the headrest height, the selection control mechanism is capable of limiting a headrest adjustment height and linking a headrest height limit with the deployed and folded states of the support mechanism, thereby dividing corresponding usage scenarios of a seat belt for children and facilitating the user to distinguish between a younger child using a child seat's built-in seat belt and an older child using a car's built-in seat belt for protection when using the child seat, thus preventing misuse from causing a safety risk to children;
2. through the coordinated interaction between the support mechanism, the locking mechanism, the locking switch, and the limiting mechanism, the headrest height can be switched between the low headrest height and the high headrest height, and by simply pressing the locking switch, the first support member on the support mechanism can be folded downward under gravity, which is simple and convenient for use; and
3. by deploying and folding the first support member, the headrest height can be adjusted between the low headrest height and the high headrest height, facilitating the user to identify a usage state of the seat back and subsequently adjust the height of the seat back.

### BRIEF DESCRIPTION OF THE DRAWINGS

To describe the technical solutions in the embodiments of the present invention more clearly, a brief introduction will be given below to the accompanying drawings required in the description of the embodiments.
FIG. 1 is a schematic front view of a first embodiment of a multi-mode seat belt-equipped child seat according to the present invention;
FIG. 2 is a schematic of an internal structure of the multi-mode seat belt-equipped child seat as shown in figure 1 in use at a high headrest height;
FIG. 3 is a schematic front view of the multi-mode seat belt-equipped child seat as shown in figure 1 in use at a low headrest height;
FIG. 4 is a schematic front view of an internal structure of the multi-mode seat belt-equipped child seat as shown in figure 4 in use at a low headrest height;
FIG. 5 is an enlarged schematic front view of a locking mechanism and a locking switch of the multi-mode seat belt selection control mechanism as shown in figure 1;
FIG. 6 is an enlarged schematic perspective view of the locking mechanism of the multi-mode seat belt selection control mechanism as shown in figure 5;
FIG. 7 is a three-dimensional schematic view of the locking mechanism of the multi-mode seat belt selection control mechanism as shown in figure 5;
FIG. 8 is an enlarged schematic front view of a support mechanism and the locking mechanism of the multi-mode seat belt selection control mechanism as shown in figure 1;
FIG. 9 is an enlarged schematic view of the support mechanism of the multi-mode seat belt selection control mechanism as shown in figure 8;
FIG. 10 is an enlarged schematic front view of a limiting block of the multi-mode seat belt selection control mechanism as shown in figure 8;
FIG. 11 is a three-dimensional schematic view of a locking switch of the multi-mode seat belt selection control mechanism as shown in figure 1;
FIG. 12 is a three-dimensional schematic view of the locking mechanism and the locking switch of the multi-mode seat belt selection control mechanism as shown in the figures 7 and 11;
FIG. 13 is a schematic view of a limiting mechanism of the multi-mode seat belt selection control mechanism as shown in figure 1;
FIG. 14 is an enlarged schematic view of part A in FIG. 1;
FIG. 15 is a simplified schematic view of the limiting mechanism as shown in figure 13; and
FIG. 16 is a simplified schematic view of a second embodiment of a limiting mechanism according to the present invention.

### DETAILED DESCRIPTION OF THE EMBODIMENTS

To make the technical problem to be solved herein as well as the technical solutions and beneficial effects of the present application clearer and more comprehensible, the following further describes the present application in detail with reference to the accompanying drawings and embodiments. It should be understood that the embodiments described herein are only intended to explain rather than limit the present application.

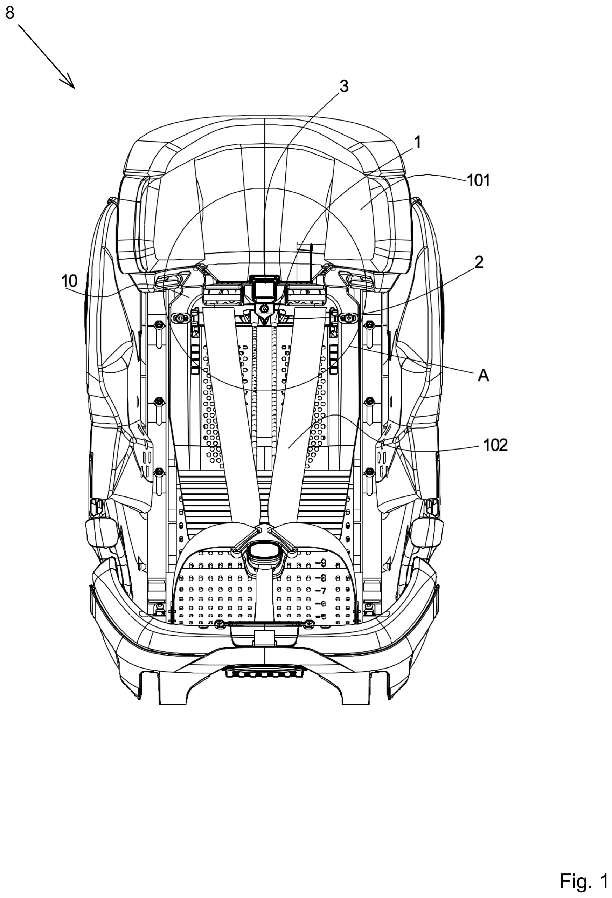

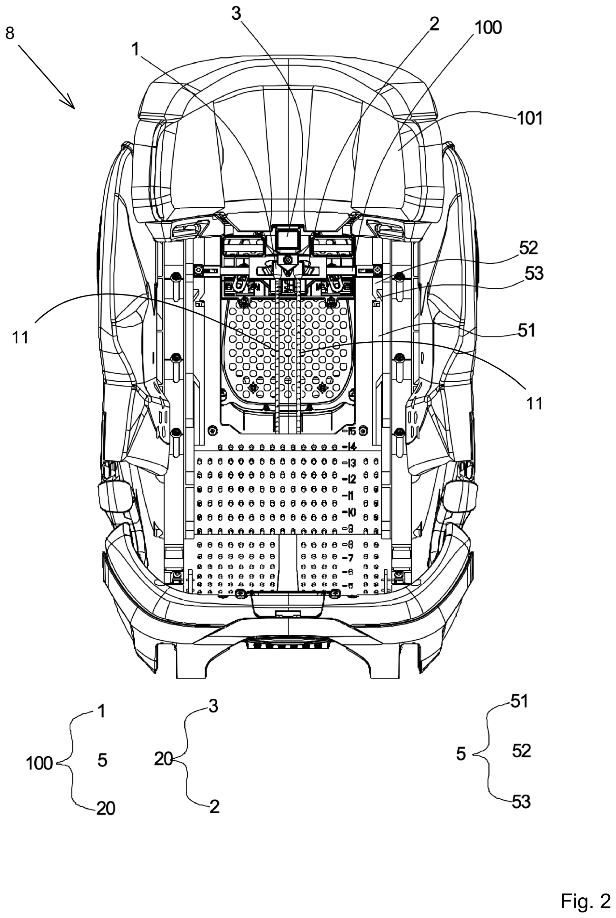

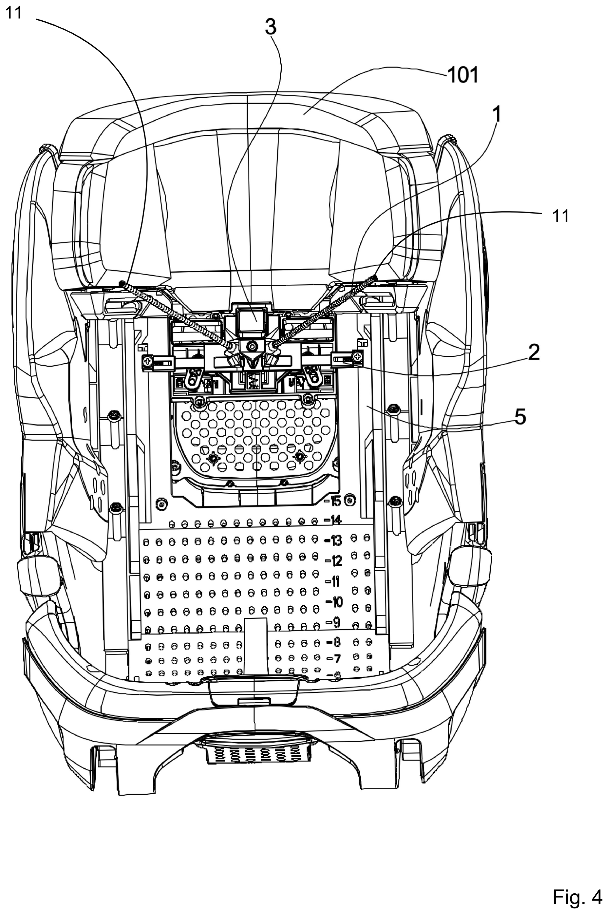

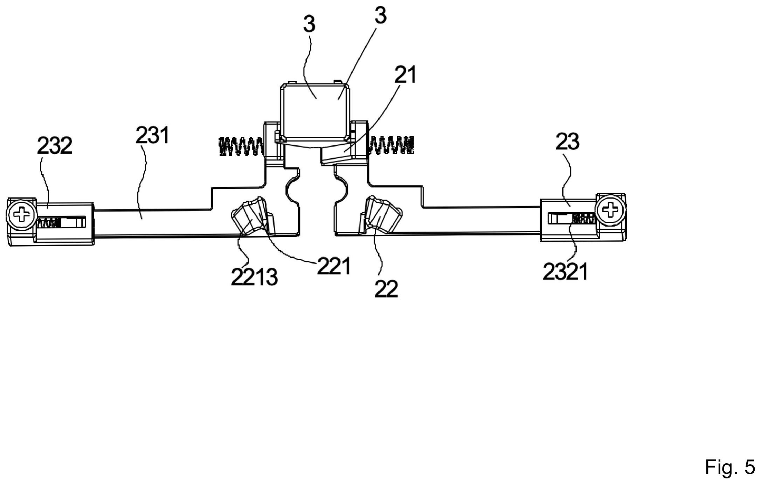

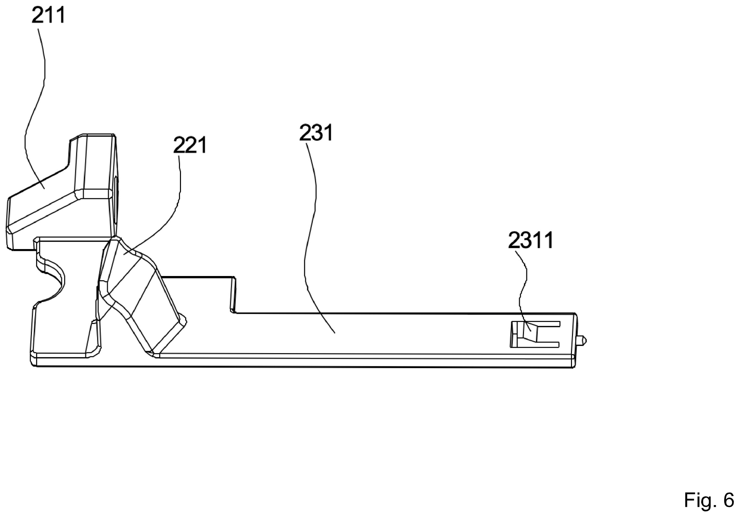

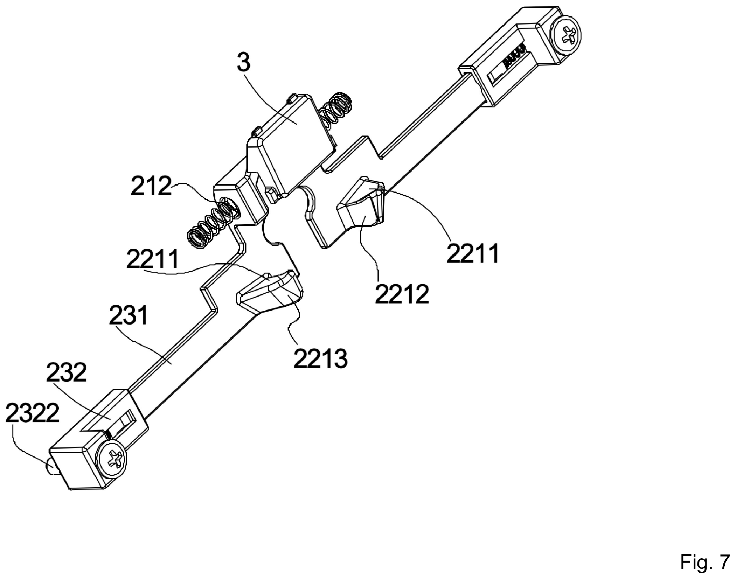

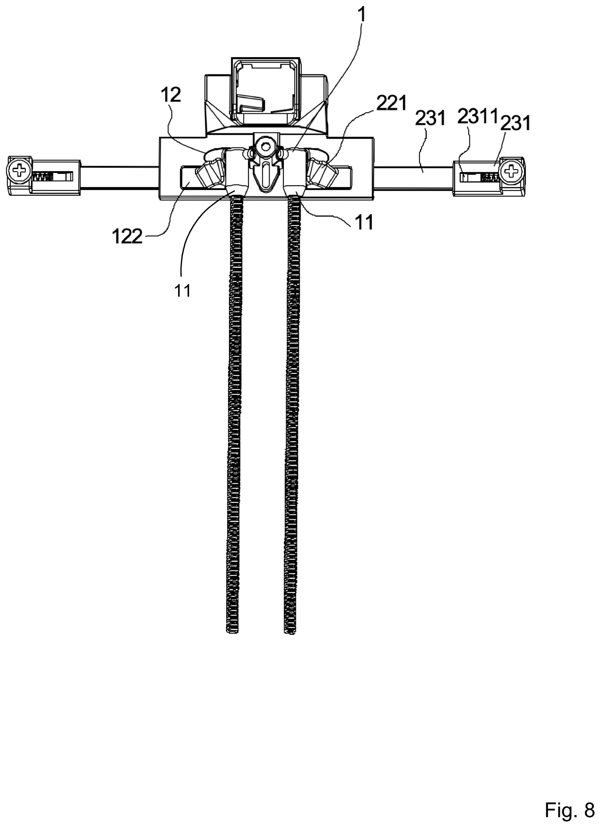

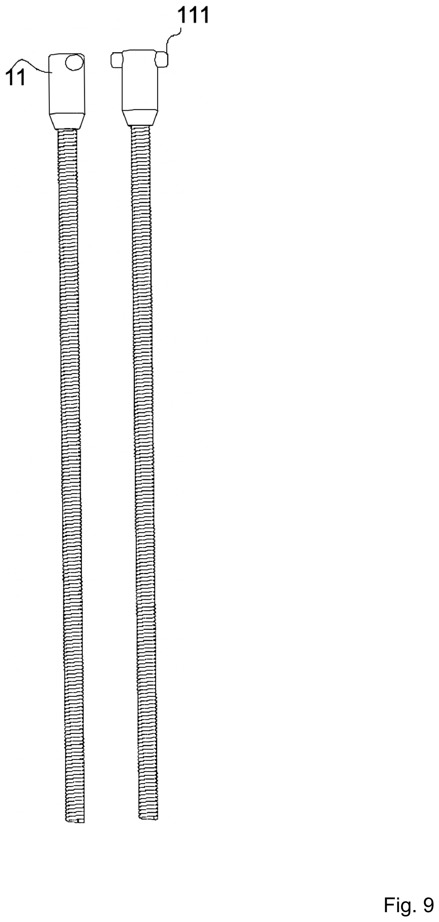

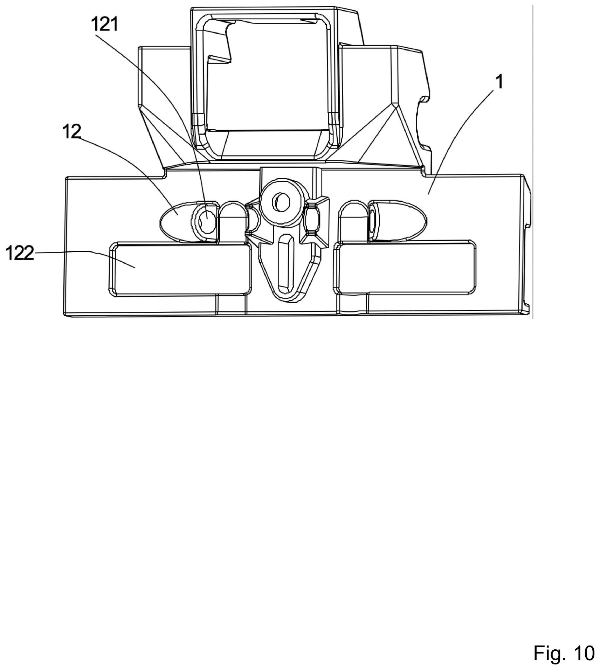

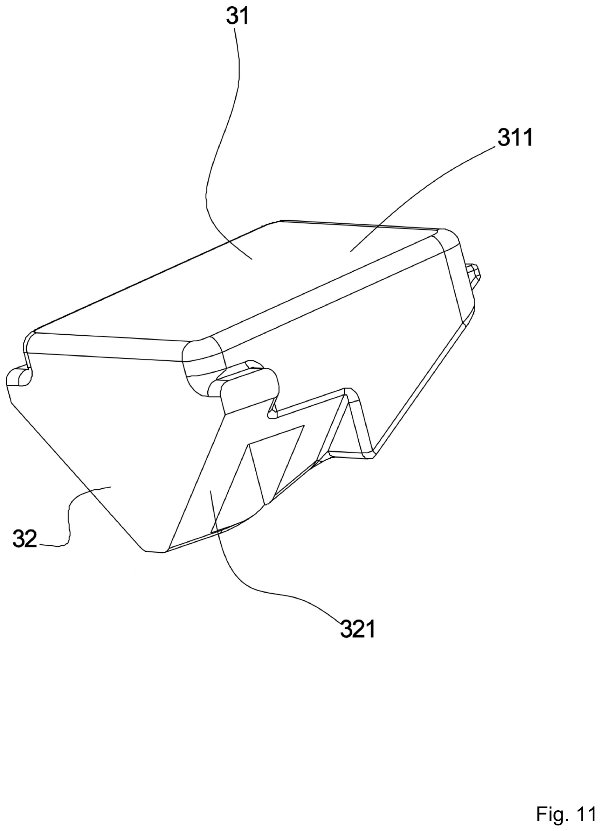

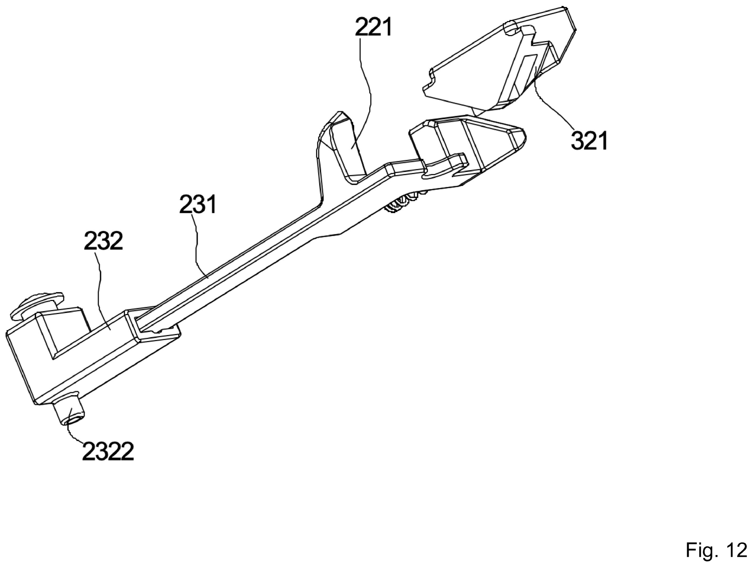

Example 1: referring to FIGs. 1-15, a multi-mode seat belt selection control mechanism 100 is provided, including a support mechanism 1 for supporting a child seat belt when deployed and capable of being folded. One side of the support mechanism 1 is provided with a limiting mechanism 5 for limiting a headrest height and a control mechanism 20 for controlling deployed and folded states of the support mechanism 1 while causing the limiting mechanism 5 to synchronously adjust the height of the headrest 101. The control mechanism 20 enables the support mechanism 1 to correspond to a low headrest height (as shown in figure 4) when deployed and to a high headrest height (as shown in figure 2) when folded. When the support mechanism 1 is in the deployed state at the low headrest height, the child seat belt 102 is used for a younger child, while when the support mechanism 1 is in the folded state at the high headrest height. A car's built-in seat belt is used for an older child. The deployed state of the support mechanism 1 at the low headrest height is used as a first indicator for a user to utilize the child seat belt 102 to protect the younger child, while the folded state of the support mechanism 1 at the high headrest height is used as a second indicator for the user to utilize the car's built-in diagonal seat belt to protect the older child, thereby helping to clearly divide age groups and prevent the user from misusing the seat belts 102, which may cause a safety risk to the children. The selection control mechanism 1 is capable of limiting a headrest adjustment height and linking a headrest height limit with a locked state of the support mechanism 1, thereby dividing corresponding usage scenarios of a seat belt 102 for children. The limiting mechanism 5 limits the headrest height so that the headrest 101 can be adjusted within a certain height.

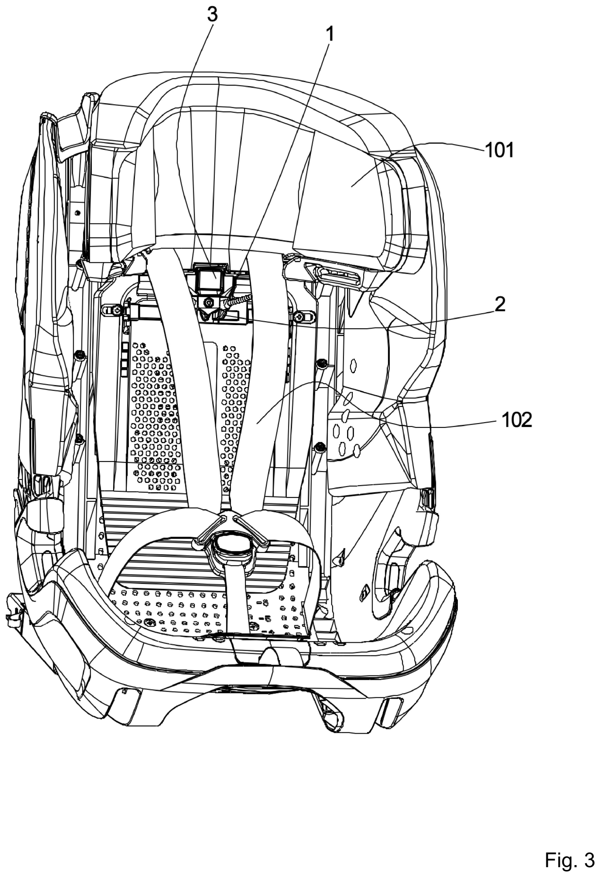

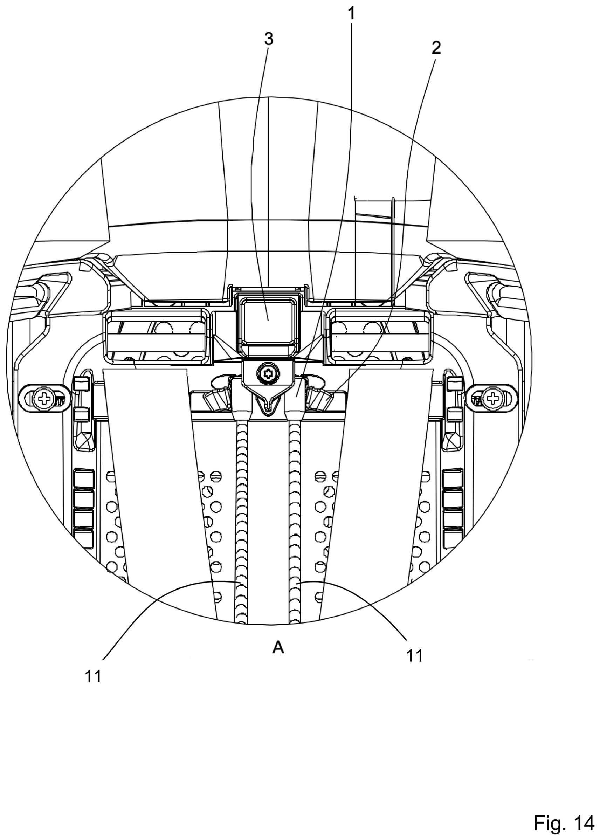

As can be seen in figure 1 and 14, the child seat's built-in belt also called a child seat's harness system is being closed as it will be to hold a child in the child seat 8. As can be seen in figure 3, the first support members 11 will normally be sleeved in the shoulder strap and supports the seat belt 102. However, for the sake of clarity, the first support members 11 have been shown outside the seat belt 102 in the folded state extend downwards, like in figure 2. In the folded state, the first support members 11 force the shoulder straps to lie against the seat back 10. In use the first support members 11 will always be sleeved in the shoulder straps.

Further, as a preferred embodiment rather than a limitation of this solution, the control mechanism 20 includes a locking switch 3 for releasing the support mechanism 1 from the deployed and folded states and for releasing the limiting mechanism 5 from a headrest adjustment height limit, and a locking mechanism 2 for locking the support mechanism 1 in the deployed and folded states and for restricting the limiting mechanism 5 from adjusting the headrest height. Through the coordinated interaction between the support mechanism 1, the locking mechanism 2, and the locking switch 3, the headrest height can be switched between the low headrest height and the high headrest height, and by simply pressing the locking switch 3, the first support members 11 on the support mechanism 1 can be folded downward under gravity, which is convenient for use.

Further, as a preferred embodiment rather than a limitation of this solution, the locking mechanism 2 includes a first locking portion 21 for matching and connecting with the locking switch 3 to enable the locking switch 3 to unlock a connection between the support mechanism 1 and the locking mechanism 2; the first locking portion 21 is connected to a second locking portion 22 for locking the support mechanism 1 in the deployed and folded states; and the second locking portion 22 is connected to a third locking portion 23 for matching and connecting with the limiting mechanism 5. The first locking portion 21 and the second locking portion 22 are integrally formed, the design of which can improve the overall mechanical strength and reliability, reduce the number of parts and assembly complexity, and possibly save production costs.

Further, as a preferred embodiment rather than a limitation of this solution, the first locking portion 21 includes a first inclined surface 211 for abutting against the locking switch 3 and a first mounting hole 212 for enabling the locking mechanism 2 to be reset; and the first mounting hole 212 can be provided with a spring for enabling the locking mechanism 2 to be reset. The first inclined surface 211 causes the locking mechanism 2 to undergo a corresponding displacement when pushed by the locking switch 3. Through contact between the inclined surface 211 and the locking switch 3, when the locking switch 3 is pressed, the inclined surface 211 converts a horizontal component force into a force that moves the locking mechanism 2, thereby achieving an unlocking action.

Further, as a preferred embodiment rather than a limitation of this solution, the second locking portion 22 includes a first protruding member 221 capable of being engaged with the support mechanism 1; and the first protruding member 221 is provided with a first engaging surface 2211 engaged with the support mechanism 1 at the low headrest height, a second engaging surface 2212 engaged with the support mechanism 1 at the high headrest height, and a pushing surface 2213 for enabling a user to push the locking mechanism 2. By providing the first engaging surface 2211 and the second engaging surface 2212, the support mechanism 1 can be locked in the deployed and folded states.

Further, as a preferred embodiment rather than a limitation of this solution, the third locking portion 23 includes a first connecting rod 231 for connecting with the second locking portion 22 and a third engaging member 232 for engaging in the limiting mechanism 5; the first connecting rod 231 is provided with a first buckle 2311 for connecting with the third engaging member 232; the third engaging member 232 is provided with a buckle hole 2321 for accommodating the first buckle 2311 and a third engaging protrusion 2322 for engaging in the limiting mechanism 5; and the first connecting rod 231 and the third engaging member 232 are provided with a spring enabling the third engaging member 232 to extend/retract toward the first connecting rod 231. The coordinated interaction between the first buckle 2311 and the buckle hole 2321 ensures a firm connection between the first connecting rod 231 and the third engaging member 232, and the presence of the spring enables the third engaging member 232 to be automatically reset when no external force is applied.

Further, as a preferred embodiment rather than a limitation of this solution, the support mechanism 1 includes two first support members 11 for supporting shoulder straps of the seat belt 102; the first support member 11 is provided with a spring for making the first support member 11 elastic and a rotating cylinder 111, the first support member 11 is capable of rotating about an axis of the rotating cylinder 111 and connected to a limiting block 12 for limiting rotation of the first support member 11; and the limiting block 12 is provided with a cylindrical slot 121 for accommodating the rotating cylinder 111 and a first limiting hole 122 for limiting a movement of the first protruding member 221. By deploying and folding the first support member 11, the headrest height can be adjusted between the low headrest height and the high headrest height, facilitating the user to identify a usage state of the child seat 8 and subsequently adjust the height of the child seat 8 to match the seat belt for the corresponding age group. The first support member 11 is sleeved in the shoulder strap and supports the seat belt 102 at the low headrest height, which is convenient for parents to use the seat belt 102 for protecting their younger child, while the seat belt 102 is retracted at the high headrest height so that the seat belt 102 fits the backrest 10, which is convenient for the older child to lean on the child seat. At the same time, the seat belt 102 is restricted by the first support members 11 to prevent it from being used at the high headrest height.

Further, as a preferred embodiment rather than a limitation of this solution, the locking switch 3 includes a pressing portion 31 for a user to press and an abutting portion 32 for abutting against the locking mechanism 2 to move the locking mechanism 2 after the user presses the pressing portion; the pressing portion 31 is provided with a pressing surface 311 for the user to press; and the abutting portion 32 is provided with a second inclined surface 321 for matching and connecting with the first inclined surface 211. The pressing surface 311 on the pressing portion 31 provides a clear and easy-to-operate interface for the user. The user only needs to apply a slight force to trigger an unlocking action, and the second inclined surface 321 on the abutting portion 32 is matched and connected with the first inclined surface 211 of the locking mechanism 2. The interaction between the inclined surfaces effectively converts the user's pressing force into a thrust parallel to the locking mechanism's movement direction, thereby achieving precise and efficient force transmission.

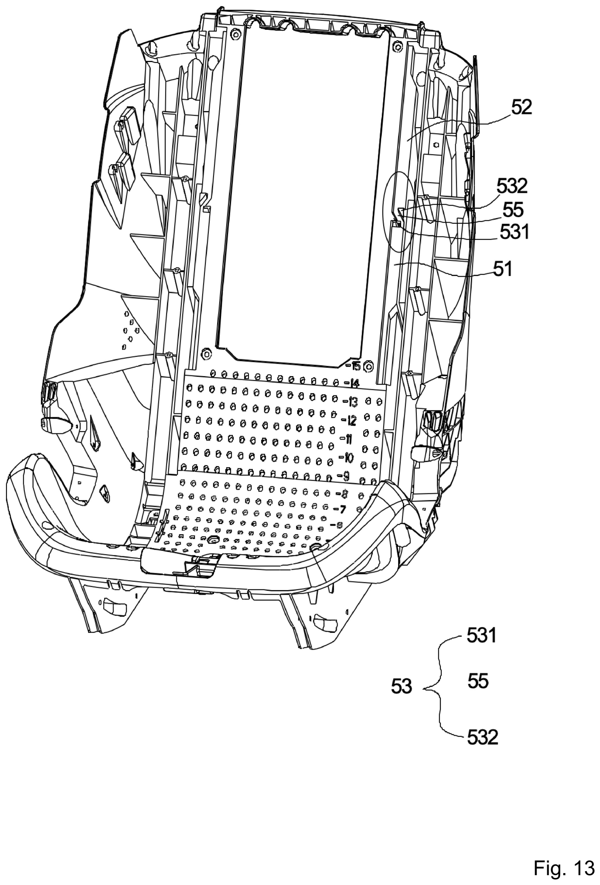

Further, as a preferred embodiment rather than a limitation of this solution, the limiting mechanism 5 includes a first sliding groove 51 for the third engaging protrusion 2322 to slide at the low headrest height area and a second sliding groove 52 for the third engaging protrusion 2322 to slide at the high headrest height area; a switching portion 53 is provided between the first sliding groove 51 and the second sliding groove 52 for enabling the headrest height to be switched between the low headrest height and the high headrest height. As can be seen in figure 13, the switching portion 53 includes a first switching member 531 and a second switching member 532, with the first switching member 531 being a first triangular protrusion and the second switching member 532 being a second triangular protrusion; and the first triangular protrusion and the second triangular protrusion are arranged in an inverted manner, and a third sliding groove 55 is provided between bevel edges of the first triangular protrusion and the second triangular protrusion for the first sliding groove 51 and the second sliding groove 52 to communicate with each other. The inverted arrangement of the first triangular protrusion and the second triangular protrusion, as well as the third sliding groove 55 between the bevel edges thereof, ensure smooth switching from the low headrest height to the high headrest height. This design reduces jamming or unsmoothness that may occur during switching, thereby improving user experience, and the design of the triangular protrusions enables the third engaging protrusion 2322 to accurately enter and exit the sliding groove.

Example 2: a multi-mode seat belt-equipped child seat 8 is provided, including a seat back 10 provided with a height-adjustable headrest 101, where one side of the headrest 101 is provided with a seat belt 102 for protecting a child; the seat back 10 is provided with the selection control mechanism 100 described in the above example; and the selection control mechanism 100 allows a user to adjust a height of the headrest 101 based on the child's posture and select a usage mode of the seat belt 102. The deployed state of the support mechanism 1 at the low headrest height is used as a first indicator for the user to utilize the child seat's built-in seat belt 102 to protect a younger child, while the folded state of the support mechanism 1 at the high headrest height is used as a second indicator for the user to utilize a car's built-in diagonal seat belt to protect an older child, thereby helping to clearly divide age groups and prevent the user from misusing the seat belts 102, which may cause a safety risk to children.

The working principle of this embodiment is as follows:
for the multi-mode seat belt-equipped child seat 8, when a short younger child is to be placed in the child seat 8, the user places the child in the child seat 8 with the headrest 101 adjusted to the lower height area, and the first support members 11 of the support mechanism 1 are deployed to support the shoulder straps of the seat belt 102, creating some space between the shoulder strap and the seat back 10, which is convenient to put the younger child in the child seat 8 and then fasten the seat belt 102. For a tall older child, the headrest 101 is first pushed to the lower height area near a limit position of the high headrest height, the third engaging member 232 is blocked by the first triangular protrusion 531 and cannot move upward further to the higher height area.

When adjusting the headrest 101 from the lower height area to the higher height area, by pressing the locking switch 3, the second inclined surface 321 pushes the first inclined surface 211, causing the locking mechanism 2 to move outward, the first protruding member 221 in the second locking portion 22 also moves outward, and thus the first engaging surface 2211 no longer engaged with the first support member 11; under gravity, the first support member 11 is folded downward and engaged with the second engaging surface 2212, causing the third engaging member 232 to move outward with a certain distance, so that the first triangular protrusion 531 no longer blocks the third engaging member 232, allowing the latter to move into the third sliding groove 55, and thus the headrest 101 can be moved upward to the higher height area; the first connecting rod 231 and the third engaging member 232 are provided with a spring for causing the third engaging member 232 to retract toward the first connecting rod 231 and then enter the second sliding groove 52 to be reset under an action of the spring; and when the headrest 101 is moved from the high headrest height to the low headrest height, the third engaging member 232 is blocked by the second triangular protrusion 532, the first support member 11 is pulled up and deployed, the first protruding member 221in the second locking portion 22 moves inward, and the first support member 11 engages with the first engaging surface 2211, locking the first support member 11 in the deployed state; the first buckle 2311 pulls the third engaging member to also move inward so that the second triangular protrusion no longer blocks the third engaging member 232; and the third engaging member 232 enters the third sliding groove 55 and then moves into the second sliding groove 52, thereby achieving the switching from the high headrest height area to the low headrest height area.

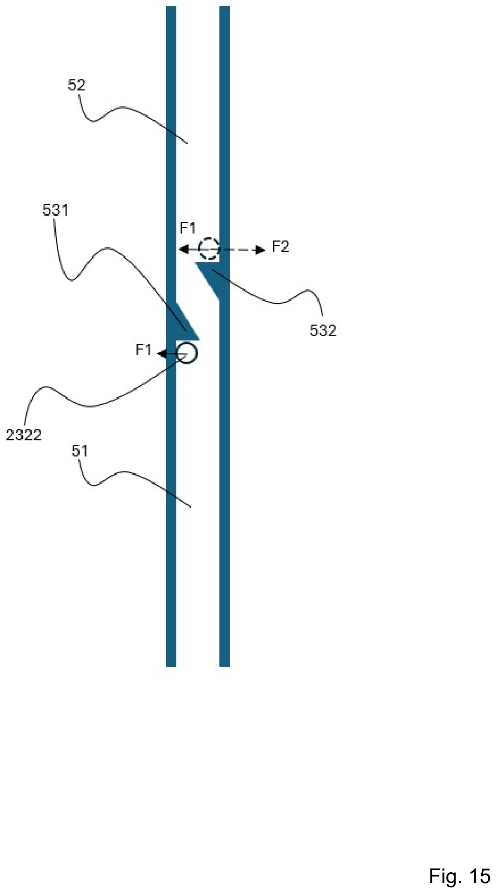

**In** this embodiment, the first sliding groove 51 and the second sliding groove 52 are aligned vertically, as shown in FIG. 15. The third engaging protrusion 2322 of the third engaging member 232 is biased indirectly by the spring in the first mounting hole 212 and directly by the spring between the first connecting rod 231 and the third engaging member 232. That is, when the third engaging protrusion 2322 being restrained in the first sliding groove 51, there's spring force (illustrated as F1 in Fig. 15, from the spring in the first mounting hole 212), biasing the third engaging protrusion 2322 and the first connecting rod 231 toward the vertical center of pressing portion 31, and thus the first protruding member 221 in the position that can maintain the first support member 11 in deployed state.

And once the third engaging protrusion 2322 enters completely in the second sliding groove 52, the spring force F1 (illustrated as F1 in Fig. 15, from the spring in the first mounting hole 212 and the spring between the first connecting rod 231 and the third engaging member 232) biasing the third engaging protrusion 2322 and the first connecting rod 231 toward the vertical center of pressing portion 31, and thus the first protruding member 221 in the position that can maintain the first support member 11 in deployed state. The signs F1, F2 in the Fig. 15 are only for illustrating the direction of the spring(s) force applying directly or indirectly on third engaging protrusion 2322, despite the exact value of the spring(s) force.

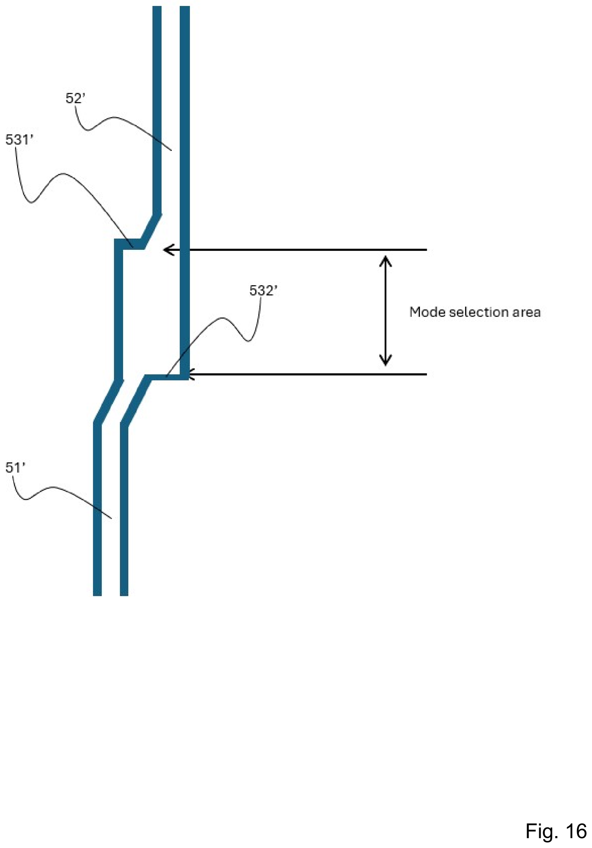

In another preferred embodiment, as shown in FIG. 16, the first sliding groove 51' and the second sliding groove 52' are staggered vertically, and the distance of the first sliding groove 51' from the vertical center of pressing portion 31 is greater than that of the second sliding groove 52' from the vertical center of pressing portion 31. When the third engaging protrusion 2322 being restrained in the first sliding groove 51', there's spring force (illustrated as F1 in Fig. 15, from the spring in the first mounting hole 212), biasing the third engaging protrusion 2322 and the first connecting rod 231 toward the vertical center of pressing portion 31, and thus the first protruding member 221 in the position that can maintain the first support member 11 in deployed state.

And once the third engaging protrusion 2322 enters completely in the second sliding groove 52', the spring force F1 (illustrated as F1 in Fig. 15, from the spring in the first mounting hole 212 and the spring between the first connecting rod 231 and the third engaging member 232) biasing the third engaging protrusion 2322 and the first connecting rod 231 toward the vertical center of pressing portion 31. Difference from the above embodiment, the second sliding groove 52' and the first sliding groove 51' are staggered vertically. That is the side of the second sliding groove 52' abuts against the third engaging protrusion 2322 and thus applies an extra force F2 (illustrated in Fig. 15 in dot line) on the third engaging protrusion 2322 for blocking the third engaging protrusion 2322 from moving toward the vertical center of pressing portion 31, and thus the first protruding member 221 in the position that cannot maintain the first support member 11 in deployed state. The foregoing describes the embodiments of the present application in detail but is not intended to limit the implementation of the present application to these embodiments. Any method structure that is similar to the present application or any technical deduction or replacement made based on the concept of the present application should be considered within the protection scope of the present application.

### List of references

- 1: support mechanism
- 2: locking mechanism
- 3: locking switch
- 5: limiting mechanism
- 8: child seat
- 10: seat back
- 11: first support member
- 12: limiting block
- 20: control mechanism
- 21: first locking portion
- 22: second locking portion
- 23: third locking portion
- 31: pressing portion
- 32: abutting portion
- 51: first sliding groove
- 51': first sliding groove
- 52: second sliding groove
- 52': second sliding groove
- 53: switching portion
- 55: third sliding groove
- 100: control mechanism
- 101: headrest
- 102: seat belt
- 111: rotating cylinder
- 121: cylindrical slot
- 122: first limiting hole
- 211: first inclined surface
- 212: first mounting hole
- 221: first protruding member
- 221: first protruding member
- 231: first connecting rod
- 232: third engaging member
- 311: pressing surface
- 321: second inclined surface
- 531: first switching member
- 532: second switching member
- 2211: first engaging surface
- 2212: second engaging surface
- 2213: pushing surface 2213
- 2311: first buckle
- 2321: buckle hole
- 2322: third engaging protrusion
- F1: force
- F2: force

## Claims

1. Multi-mode safety belt selection control mechanism (100), wherein the selection control mechanism (100) comprises a support mechanism (1) for supporting a child seat belt (102) when deployed and capable of being folded; and a limiting mechanism (5) is provided for limiting the height-adjustment of headrest (101) and a control mechanism (20) for selecting deployed and folded states of the support mechanism (1) and synchronously enabling the height-adjustment of the headrest (101) to be blocked or unblocked by the limiting mechanism (5), so that the support mechanism (1) in deployed state and in folded state are respectively aligned with the headrest (101) being retained in a lower height area and in a higher height area.

2. Multi-mode safety belt selection control mechanism (100) of claim 1, wherein the control mechanism (20) comprises a locking switch (3) for switching the support mechanism (1) between the deployed state and folded state and for releasing the height-adjustment of the headrest (101) from blocked or unblocked by the limiting mechanism (5), and a locking mechanism (2) for locking the support mechanism (1) in the deployed state or folded state and for restricting the height-adjustment of the headrest (101) from blocked or unblocked by the limiting mechanism (5).

3. Multi-mode safety belt selection control mechanism (100) of claim 2, wherein the locking mechanism (2) comprises a first locking portion (21) for matching and connecting with the locking switch (3) to enable the locking switch (3) to unlock a connection between the support mechanism (1) and the locking mechanism (2); the first locking portion (21) is connected to a second locking portion (22) for locking the support mechanism (1) in the deployed and folded states; and the second locking portion (22) is connected to a third locking portion (23) for matching and connecting with the limiting mechanism (5).

4. Multi-mode safety belt selection control mechanism (100) of claim 3, wherein the first locking portion (21) comprises a first inclined surface (211) for abutting against the locking switch (3) and a first mounting hole (212) for enabling the locking mechanism (2) to be reset; and the first mounting hole (212) can be provided with a spring for enabling the locking mechanism (2) to be reset.

5. Multi-mode safety belt selection control mechanism (100) of claim 3 or 4, wherein the second locking portion (22) comprises a first protruding member (221) capable of being engaged with the support mechanism (1); and the first protruding member (221) is provided with a first engaging surface (2211) engaged with the support mechanism (1) at the low headrest height, a second engaging surface (2212) engaged with the support mechanism (1) at the high headrest height, and a pushing surface (2213) for enabling a user to push the locking mechanism (2).

6. Multi-mode safety belt selection control mechanism (100) of claim 3, 4 or 5, wherein the third locking portion (23) comprises a first connecting rod (231) for connecting with the second locking portion (22) and a third engaging member (232) for engaging in the limiting mechanism (5); the first connecting rod (231) is provided with a first buckle (2311) for connecting with the third engaging member (232); the third engaging member (232) is provided with a buckle hole (2321) for accommodating the first buckle (2311) and a third engaging protrusion (2322) for engaging in the limiting mechanism (5); and the first connecting rod (231) and the third engaging member (232) are provided with a spring enabling the third engaging member (232) to extend/retract toward the first connecting rod (231).

7. Multi-mode safety belt selection control mechanism (100) of one of the preceding claims, wherein the support mechanism (1) comprises a first support member (11) for connecting and supporting a shoulder strap of the seat belt (102); the first support member (11) is provided with a rotating cylinder (111) and capable of rotating about an axis of the rotating cylinder (111), and the first support member (11) is connected to a limiting block (12) for limiting rotation of the first support member (11); and the limiting block (12) is provided with a cylindrical slot (121) for accommodating the rotating cylinder (111) and a first limiting hole (122) for limiting a movement of the first protruding member (221).

8. Multi-mode safety belt selection control mechanism (100) of one of the preceding claims, wherein the locking switch (3) comprises a pressing portion (31) for a user to press and an abutting portion (32) for abutting against the locking mechanism (2) to move the locking mechanism (2) after the user presses the pressing portion; the pressing portion (31) is provided with a pressing surface (311) for the user to press; and the abutting portion (32) is provided with a second inclined surface (321) for matching and connecting with the first inclined surface (211).

9. Multi-mode safety belt selection control mechanism of one of the preceding claims, wherein the limiting mechanism (5) comprises a first sliding groove (51) for the third engaging protrusion (2322) to slide at the low headrest height and a second sliding groove (52) for the third engaging protrusion (2322) to slide at the high headrest height; a switching portion (53) is provided between the first sliding groove (51) and the second sliding groove (52) for enabling the headrest height to be switched between the low headrest height and the high headrest height; the switching portion (53) comprises a first switching member (531) and a second switching member (532), with the first switching member (531) being a first triangular protrusion and the second switching member (532) being a second triangular protrusion; and the first triangular protrusion and the second triangular protrusion are arranged in an inverted manner, and a third sliding groove (55) is provided between bevel edges of the first triangular protrusion and the second triangular protrusion for the first sliding groove (51) and the second sliding groove (52) to communicate with each other.

10. Multi-mode safety belt selection control mechanism (100) of claim 9, wherein the first sliding groove (51) and the second sliding groove (52) are aligned vertically.

11. Multi-mode safety belt selection control mechanism (100) of claim 9 or 10, wherein the first sliding groove (51) and the second sliding groove (52) are staggered vertically.

12. Multi-mode safety belt selection control mechanism (100) of claim 11, wherein the distance of the first sliding groove (51) from the vertical center of pressing portion (31) is greater than that of the second sliding groove (52) from the vertical center of pressing portion (31).

13. Multi-mode safety belt-equipped child seat (8), comprising a seat back (10) provided with a height-adjustable headrest (101), wherein one side of the headrest (101) is provided with a seat belt (102) for protecting a child; the seat back (10) is provided with the selection control mechanism (100) according to any one of claims 1-12; and the selection control mechanism (100) allows a user to adjust a height of the headrest (101) based on the child's posture and select a usage mode of the seat belt (102).
